Europäisches Patentamt

European Patent Office

Office européen des brevets

(11) Publication number: **0 140 631**
**A2**

(12) **EUROPEAN PATENT APPLICATION**

(21) Application number: **84307022.8**

(22) Date of filing: **15.10.84**

(51) Int. Cl.⁴: **G 01 K 7/06**

(30) Priority: **19.10.83 GB 8327940**

(43) Date of publication of application: **08.05.85**
**Bulletin 85/19**

(84) Designated Contracting States: **BE DE FR IT NL**

(71) Applicant: **British Gas Corporation, Rivermill House 152 Grosvenor Road, London SW1V 3JL (GB)**

(72) Inventor: **Peet, Terence, 133 Springwell Road, Heston Middlesex (GB)**
Inventor: **Stevens, Reginald Leslie, 20 Havelock Road, Dartford Kent (GB)**
Inventor: **Cole, Peter, 82 Carbrera Avenue, Virginia Water Surrey (GB)**

(74) Representative: **Morgan, David James, British Gas Corporation Patents Department 326 High Holborn, London WC1V 7PT (GB)**

(54) **A thermocouple.**

(57) A thermocouple of the type comprising a sheathed wire in which the wire forms one conductor and the sheath at least part of the other conductor, the wire and sheath being joined together at one end by an autogenous weld bead to form a hot junction, and those portions of the wire and sheath adjacent to the hot junction comprising respectively copper-containing and substantially copper-free materials, characterised in that the weld bead contains no more than 10% by weight of copper.

EP 0 140 631 A2

## A Thermocouple

The present invention relates to a thermocouple of the type comprising a sheathed wire in which the wire forms one conductor and the sheath at least part of the other conductor, the wire and sheath being joined together at one end by an autogenous weld bead to form a hot junction, and those portions of the wire and sheath adjacent to the hot junction comprising respectively copper-containing and substantially copper-free materials.

The thermocouple is of the type which is fully described in our co-pending UK Patent application No. 82 35426 and is used for similar purposes.

The sheathed wire consists of a copper-containing material such as a copper-nickel alloy (eg constantan) while the sheath material at the hot junction end consists of a substantially copper-free material such as an iron-containing material eg ferrite, an alloy steel such as a 27% chromium alloy steel, or a nickel-containing material such as "Inconel" (Registered Trade Mark).

To form the hot junction end of the thermocouple the sheath and wire are welded autogenously, that is without the use of a filler, to fuse together the two components at the tip by the formation of a

-2- 0140631

weld bead. The resulting weld bead comprises a mixture of the wire and sheath materials. The sheath covers part of or the entire length of the wire, which is sealed within the sheath by seals formed at each end of the sheath. The weld bead forms one of the seals at the hot end of the sheath and the other (cold) end of the sheath may be provided with a hermetic seal of the type described in UK Patent Application No. 82 35426.

In effect, therefore, the sheathed wire should be hermetically sealed within the sheath to prevent the ingress of oxygen through the seals into the sheath, and the consequent deterioration of the wire due to oxidation and subsequent failure of the thermocouple.

The applicants have found that the cold end hermetic seals described in UK Patent Application No. 82 35426 are particularly effective in preventing oxygen ingress through the cold end and have the greatest short term effect on reliability of the device. The service life is however also dependent on the rate of oxygen diffusion through the weld bead at the hot junction end of the thermocouple. This also leads to the oxidation of, and subsequent failure of the thermocouple but at a slower rate.

The present invention is based on the discovery made by the applicants that the rate of diffusion is dependent on the level of

0140631

copper in the weld bead and that the rate of diffusion can be reduced to an acceptable level by maintaining the copper content of the weld bead at a level which does not exceed 10% by weight. In this way the service life of the thermocouple can be extended still further.

According therefore to the present invention there is provided a thermocouple of the type comprising a sheathed wire in which the wire forms one conductor and the sheath at least part of the other conductor, the wire and sheath being joined together at one end by an autogenous weld bead to form a hot junction, and those portions of the wire and sheath adjacent to the hot junction comprising respectively copper-containing and substantially copper-free materials, characterised in that the weld bead contains no more than 10% by weight of copper.

A method of producing this level of copper in a thermocouple comprising a copper-nickel wire (eg constantan) containing 55% copper by weight and a sheath comprising a 27% by weight chromium alloy steel tube is as follows:-

1. Produce near the hot end of the tube an angled narrowing by swaging or machining, such that the internal diameter of the tube is made slightly smaller than the diameter of the inner wire. The internal diameter of the tube is of course initially greater than the diameter of the wire.  The narrowing should be such that when the inner wire is inserted fully into the tube, it is held in a central position and at a constant distance from the end of the tube of at least 1mm.

2.  While maintaining the relative positions of the tube and wire perform an autogenous weld to fuse together the two components. Any of the conventional welding techniques can be used such as metal inert gas, tungsten inert gas, projection resistance or induction heating.

## Claims

1. A thermocouple of the type comprising a sheathed wire in which the wire forms one conductor and the sheath at least part of the other conductor, the wire and sheath being joined together at one end by an autogenous weld bead to form a hot junction, and those portions of the wire and sheath adjacent to the hot junction comprising respectively copper-containing and substantially copper-free materials, characterised in that the weld bead contains no more than 10% by weight of copper.

2. A thermocouple substantially as hereinbefore described.